# FASCICULE DE BREVET EUROPEEN

(11) **EP 1 860 953 B1**
(45) Date de publication et mention de la délivrance du brevet: **22.04.2009**
(21) Numéro de dépôt: 06709388.0
(22) Date de dépôt: 28.02.2006
(51) Int. Cl.: A22C 7/00, A47J 27/20

(54) **UNITE DE MOULAGE DE PRODUITS ALIMENTAIRES, NOTAMMENT POUR LA CUISSON DE JAMBONS**
EINHEIT ZUM FORMEN VON LEBENSMITTELN, INSBESONDERE FÜR KOCHSCHINKEN
UNIT FOR MOULDING FOOD PRODUCTS, IN PARTICULAR FOR COOKING HAM

(30) Priorité: 02.03.2005 FR 0502100
(43) Date de publication de la demande: 05.12.2007
(73) Titulaire: Kaufler, 22600 Loudéac (FR)
(72) Inventeur: CHAMPALAUNE, Jean-Claude, 35290 Saint-Méen-le-Grand (FR); CORVELLER, Yvon, 56300 Pontivy (FR)
(74) Mandataire: Le Faou, Daniel
(86) Numéro de dépôt international: PCT/FR2006/000452
(87) Numéro de publication internationale: WO 2006/092497

(56) Documents cités:
- EP-A- 0 722 663
- FR-A- 2 766 062
- US-A- 2 310 957
- US-A- 4 386 451

## Description

La présente invention concerne une unité de moulage de produits alimentaires, notamment pour la cuisson de jambons.

Plus précisément, l'invention se rapporte à une unité de moulage du type comprenant un ensemble de moules en forme de goulottes disposées horizontalement, côte à côte et parallèlement les unes aux autres, leur fond étant dirigé vers le bas et leur ouverture vers le haut, cet ensemble de moules étant fixé à des moyens de support qui autorisent l'empilage des unités les unes sur les autres.

Des unités de ce genre font par exemple l'objet des documents de brevet FR-A-2 601 653 , FR-A-2 672 270 ou US-2 310 957.

Les goulottes sont fixées, à chacune de leurs deux extrémités, à des plaques verticales.

Selon le FR-A-2 601 653, ces plaques constituent les deux côtés d'une structure en forme de cadre, équipée de quatre pieds (deux par plaque) adaptés pour permettre l'empilage des unités.

Selon le FR-A-2 672 270, les plaques verticales d'extrémité sont conformées, par pliage, d'une manière particulière qui leur confère une section autorisant l'empilage.

Après empilage, les goulottes de deux couches superposées se trouvent à une certaine distance les unes au-dessus des autres, de manière à permettre la circulation de l'air autour des différents moules à l'intérieur des cellules de cuisson, ou dans d'autres postes de traitement des produits.

Du fait que plusieurs moules sont regroupés sur un même ensemble, les opérations faites sur les produits se trouvent facilitées, et le rendement des opérations se trouve amélioré.

Ainsi, si on a affaire à la cuisson de jambons, il est possible de manipuler simultanément l'ensemble des moules formant une unité ; cette manipulation, qui se fait notamment pour leur empilage et leur désempilage, se prête bien à une automatisation, à l'aide de manipulateurs mécaniques ; pour cela, on utilise généralement une paire de bras qui viennent saisir l'unité par le dessous, en supportant les goulottes.

Une fois qu'une pile d'unités a été formée, il est possible de traiter simultanément les produits qui y sont contenus, par exemple de les cuire à l'intérieur d'une cellule de cuisson appropriée.

Une telle pile présente un encombrement relativement réduit, ce qui permet de travailler avec un rendement élevé.
Il a été proposé, par ailleurs, de doter chaque unité de ce type d'un ensemble d'éléments de couvercle. A chaque goulotte est ainsi associée un élément de couvercle qui s'étend en dessous de son fond, et est fixé à celui-ci.

Lorsque les unités sont empilées les unes sur les autres, chaque élément de couvercle vient s'engager dans l'ouverture de la goulotte appartenant à l'unité sous-jacente, à l'aplomb duquel elle se trouve.

L'unité inférieure de la pile peut être dépourvue d'éléments de couvercle, ou bien reposer sur un support - par exemple sur un chariot de transfert - directement par ces couvercles ; l'unité supérieure reçoit des éléments de couvercle spéciaux, portés par une structure dépourvue de moules.

De telles unités de moulage, qu'elles soient ou non munies d'éléments de couvercle, sont commercialisées par la demanderesse sous la désignation commerciale "POLYMODULE" (marque déposée).

Lorsque les unités sont pourvues d'éléments de couvercle, les bras de manutention dont il a été fait état plus haut viennent également saisir les unités de moulage par le dessous, mais ils supportent alors non plus les fonds de goulottes, mais les éléments de couvercle fixés sous les fonds.

L'utilisation de couvercles est utile notamment pour la cuisson des jambons, car la viande se trouve alors confinée à l'intérieur d'un volume bien défini dans lequel elle est maintenue sous une certaine pression qui va éliminer les manques de matière et déterminer sa forme définitive.

Il est souhaitable cependant que la pression exercée par les couvercles puisse être bien contrôlée, de manière individuelle.

Avec des dispositifs du genre décrits ci-dessus, cette pression est très aléatoire car elle dépend du volume de chaque jambon (ou autre produit) se trouvant dans le moule. En effet, les couvercles d'une unité pressent en premier sur le ou les produits) de plus grand volume de l'unité sous-jacente, qui se trouvent donc soumis à un écrasement plus important que les autres; au contraire, les produits de petit volume risquent de ne pas être suffisamment comprimés.

Comme, en pratique, les volumes effectifs des produits insérés dans les moules, malgré le pesage préalable de ces produits, s'inscrivent inévitablement dans une certaine fourchette de tolérances, ils vont être soumis à des pressions pouvant être très variées.

On comprend par ailleurs que les produits contenus dans les unités placées en bas de la pile vont être soumis à des pressions plus importantes que ceux des unités supérieures, car ils ont à supporter tout le poids des unités qui les surplombent. Enfin, l'appui d'une unité sur l'unité sous-jacente, qui devrait se faire uniquement par l'intermédiaire des supports de goulottes, ne se fait pas dans de bonnes conditions, les zones d'appui des couvercles - ou de certains couvercles - sur les produits sous-jacents contrariant le bon appui des supports î'un sur l'autre.

Il en résulte une instabilité de l'empilage, qui est néfaste à différentes opérations, notamment au transfert des produits.

Dans le document EP 0 722 663 est décrite une unité de moulage du type indiqué plus haut, à moules multiples, grâce auquel, après empilage de plusieurs unités, les supports de goulottes sont en appui les uns sur les autres, tandis que chaque produit contenu dans un moule, par exemple un jambon, est individuellement soumis à une pression contrôlée, qui lui est appliquée par l'élément de couvercle que le surplombe.

A cet effet, chaque élément de couvercle est mobile individuellement en direction verticale, sur une course limitée, par rapport à la goulotte à laquelle il est associé, un système élastique tel qu'un jeu de ressorts tendant constamment à l'écarter du fond de la goulotte pour le repousser vers le bas.

Une telle unité se prête bien à une manipulation mécanisée, la manutention des unités de moulage pouvant se faire sans problème, avec une grande stabilité, par des organes de soutien et de transfert classiques.

Pour la manipulation individuelle des unités, en vue notamment de leur empilage avant cuisson, et de leur désempilage après cuisson, on utilise généralement un robot de préhension et de manutention tel que, par exemple, celui diffusé par la demanderesse sous la dénomination « AUTOSTACKER » (marque déposée).

A cet effet, la tête mobile du robot possède des doigts de préhension, par exemple deux paires de doigts adaptés pour s'engager dans des orifices récepteurs ad hoc prévus dans les plaques verticales disposées aux extrémités des goulottes.

Dans le dispositif qui fait l'objet du document FR 2 672 270 précité, il est prévu deux rangées superposées de trois orifices, ménagés dans lesdites plaques, lesquelles consistent en des flancs repliés de façon à permettre l'empilage ; pour la préhension d'une unité, seuls les deux orifices d'extrémité de la rangée supérieure sont utilisés (soit quatre au total). Cependant, ces orifices - y compris l'orifice central - ont également pour fonction de favoriser la circulation des fluides servant au traitement thermique des produits. C'est ce qui explique la présence de la rangée inférieure d'orifices, qui vient en regard de la rangée supérieure des orifices de l'unité sous-jacente afin d'autoriser cette circulation au sein de la pile.

Globalement ce genre de dispositif donne satisfaction.

Il peut néanmoins subsister une difficulté liée à un mauvais appui des unités les unes sur les autres, en particulier lorsque les produits alimentaires, notamment les viandes, contenus dans les goulottes ont des volumes et/ou des formes relativement disparates, sortant d'une fourchette précise de tolérances.

Les parties en saillie du produit risquent d'empêcher un enfoncement convenable du couvercle qui le recouvre, même si ce couvercle est mobile et sollicité par des ressorts comme prévu dans le EP 0 722 663, ce qui compromet alors la verticalité et l'équilibre de la pile.

Pour pallier cet inconvénient, il est connu de faire usage de sangles latérales à levier de blocage. Les sangles, par exemple au nombre de quatre (deux de chaque côté de la pile) sont disposées verticalement et accrochées à l'unité supérieure et à l'unité inférieure de la pile et mises sous tension. Les orifices susmentionnés de préhension et de circulation de fluide de traitement sont par exemple utilisés pour l'accrochage de ces sangles.

Cette tension doit être suffisante pour écraser les surplus de matière en saillie, ce qui rend la mise en place de ces sangles pénible. A la fin du traitement, les sangles doivent être enlevées.

Ce genre d'opération, non automatisable, est long et fastidieux. De plus, au cours du traitement thermique, notamment de cuisson, on observe souvent une dilatation des sangles, qui se détendent, rendant la pile à nouveau instable en fin de traitement.

Enfin, les sangles utilisées sont en général faites de fibres tissées, susceptibles de constituer des nids bactériens peu compatibles avec les contraintes d'hygiène applicables dans l'industrie agro-alimentaire.

Le document FR-A- 2 839 044 a pour objet un dispositif servant à arrimer entre eux une pluralité d'unités (appelées récipients). Ce dispositif comporte une paire d'éléments d'ancrage solidaires de récipients disposés aux extrémités de l'empilement, et reliés par un élément élastiquement déformable, apte à être mis sous tension au moyen d'un levier de verrouillage.

On utilise une paire de dispositifs similaires sur deux côtés opposés de l'empilement afin de le maintenir sous tension.

Si ce genre de dispositif résout le problème des nids bactériens liés à la présence de sangles à tissu fibreux, il ne permet cependant pas de pallier les autres inconvénients mentionnés ci-dessus, notamment la non possibilité d'automatisation des opérations d'empilage et de désempilage, car la mise en place et l'enlèvement de ces dispositifs d'arrimage ne peut être réalisée que manuellement.

L'invention a pour objectif de résoudre ces problèmes.

Comme exposé plus haut, elle a pour objet une unité de moulage de produits alimentaires, notamment pour la cuisson de jambons, qui comporte un ensemble de moules en forme de goulottes disposées horizontalement, côte à côte et parallèlement les unes aux autres, leur fond étant dirigé vers le bas et leur ouverture vers le haut, cet ensemble de moules étant fixé à des moyens de support qui autorisent l'empilage des unités les unes sur les autres, cette unité étant en outre solidaire d'un ensemble d'éléments de couvercle, dont le nombre est égal à celui des goulottes, chaque élément de couvercle s'étendant en dessous d'un fond de goulotte, de telle manière que lorsque les unités sont empilées les unes sur les autres, chaque élément de couvercle vient s'engager dans l'ouverture de la goulotte appartenant à l'unité sous-jacente, à l'aplomb duquel elle se trouve.

L'objectif de l'invention est atteint grâce au fait que cette unité comporte des moyens d'encliquetage élastique intégrés, aptes à assurer automatiquement, par pression verticale du haut vers le bas, sa solidarisation avec une unité similaire sous-jacente et/ou située au-dessus d'elle, afin d'assurer une mise en appui complète de leurs moyens de support respectifs, ces moyens d'encliquetage pouvant être ultérieurement escamotés pour permettre la désolidarisation mutuelle des deux unités et le désempilage.

Du fait que les moyens d'encliquetage sont intégrés aux unités, et non séparés, la manutention automatisée de ces unités est possible.

Au cours de la descente d'une unité sur l'unité sous-jacente, qui est avantageusement réalisée au moyen de la tête d'un robot de préhension et de manipulation, une pression dirigée du haut vers le bas (et dont la valeur peut être très élevée) est exercée, qui a pour effet de compresser les éventuels excès de produit, après quoi s'opère l'encliquetage.

Les deux unités sont alors solidarisées complètement et irréversiblement l'une avec l'autre.

Dans le cas où les unités possèdent des éléments de couvercle élastiquement mobiles par rapport aux goulottes auxquelles ils sont associés, comme c'est le cas notamment pour les unités décrites dans les documents EP 0 722 663 ou EP 0 867 140, l'application de cette pression a également pour intérêt de comprimer correctement les ressorts agissant sur les éléments de couvercle, de sorte que ceux-ci peuvent remplir pleinement la fonction de compensation qui leur est dévolue.

Après empilage et assemblage par encliquetage d'une série d'unités on obtient une pile parfaitement verticale et stable.

Les dilatations susceptibles d'intervenir au cours du traitement thermique subséquent n'ont pas d'influence quant à l'ancrage mutuel de ces unités au sein de la pile.

Par ailleurs, selon un certain nombre de caractéristiques avantageuses, mais non limitatives, de l'invention :
- lesdits moyens d'encliquetage élastique intégrés comprennent des doigts de blocage mobiles, sollicités par un ressort, et susceptibles d'occuper, sous l'action de ce ressort, une première position, dite de verrouillage, dans laquelle ils coopèrent avec un élément de butée de l'unité similaire sous-jacente et/ou située au-dessus d'elle, afin d'assurer la retenue mutuelle des deux unités en direction verticale, et une seconde position, dite escamotée, dans laquelle ils sont écartés dudit élément de butée et autorisent la désolidarisation mutuelle des deux unités.
- ces doigts de blocage mobiles sont des leviers pivotants ;
- les éléments de butée sont intégrés à l'organe de support et les doigts de blocage mobiles présentent une zone de surface d'arrêt, apte à prendre appui contre un élément de butée de l'unité similaire située au-dessus d'elle afin de la retenir appliquée contre elle, lorsque le doigt mobile occupe sa position de verrouillage ;
- les doigts de blocage mobiles sont au nombre de quatre et, vus de dessus, ils sont sensiblement disposés en rectangle ;
- ces doigts font légèrement saillie vers l'extérieur de l'unité lorsqu'ils occupent leur position de verrouillage, leur escamotage étant réalisé par poussée, vers l'intérieur de l'unité, par exemple au moyen de tétons de déverrouillage mobiles équipant un robot manipulateur ;
- lesdits moyens de support consistant en une paire de plaques d'appui fixées transversalement à chaque extrémité de l'ensemble de goulottes, et ces plaques étant repliées de telle façon que leur section droite comprend une partie supérieure verticale et rectiligne, une première zone d'appui sensiblement horizontale dirigée vers l'extérieur, une partie inférieure verticale et rectiligne, une seconde zone d'appui sensiblement horizontale dirigée vers l'intérieur, de moindre largeur que la première zone d'appui, et une portion d'extrémité basse dirigée obliquement vers le haut et vers l'extérieur, d'une part, lesdits doigts de blocage mobiles sont montés sur ces plaques au niveau de leur dite partie supérieure, les ressorts tendant à les déplacer vers l'extérieur, sur une course limitée et, d'autre part, c'est la base des plaques, au niveau de ladite portion d'extrémité basse, qui fait office d'élément de butée pour les doigts de blocage de l'extrémité sous-jacente ;
- lesdits doigts de blocage possèdent une surface externe profilée, formant une rampe, apte à glisser contre la base des plaques de l'unité située au-dessus d'elle, au niveau de leur dite portion d'extrémité basse, afin de repousser progressivement et provisoirement les doigts de blocage vers l'intérieur, pour les escamoter, lors de la mise en appui par un mouvement vertical de descente de cette unité, ce qui réalise l'encliquetage automatique.
- dans lesdites plaques sont ménagées, au niveau de leur dite partie inférieure, des ouvertures qui, lorsque l'unité est correctement placée sur une autre unité sous-jacente, se positionnent en regard des doigts de blocage de cette dernière, autorisant ainsi le passage d'organes de déverrouillage, tels que des tétons mobiles horizontalement, transversalement aux plaques.
- l'unité comporte quatre doigts de blocage disposés en rectangle, au voisinage de ses angles, à l'extérieur de l'ensemble de goulottes.

D'autres caractéristiques et avantages de l'invention apparaîtront de la description qui va maintenant en être faite, en référence aux dessins annexés, qui représentent à titre non limitatif un mode d'exécution possible de l'invention.

Les figures 1 et 2 sont des vues respectivement de côté (transversalement aux goulottes) et de face (parallèlement aux goulottes) - et partiellement en coupe - d'une unité de moulage conforme à l'invention.

La figure 3 est une vue de dessus de cette unité.

La figure 4 est une vue de détail coupée et de face, qui représente les moyens d'encliquetage élastique dans leur position de verrouillage.

La figure 5 est une vue analogue à celle de la figure 4, illustrant l'opération de déverrouillage, par escamotage de ces moyens d'encliquetage élastique.

Les figures 6 et 7 sont des détails montrant un doigt de verrouillage, respectivement de face et de dessus, dans sa position de verrouillage.

Les figures 6A et 7A sont des vues similaires aux précédentes, le doigt étant escamoté.

Les figures 8 et 8A sont des vues de dessus en coupe selon le plan horizontal référencé VIII-VIII sur la figure 6, le doigt occupant, respectivement, une position de verrouillage et une position escamotée.

La figure 9 est une vue de droite de la figure 6.

La figure 10 est une vue de dessus schématique d'un cadre constituant la tête de préhension d'un robot manipulateur servant à l'empilage et au désempilage d'unités conformes à l'invention, les organes de préhension occupant une position inactive.

La figure 11 est une vue analogue du même cadre, les organes de préhension se trouvant en position active.

Les figures 12 et 13 sont des vues de face du cadre, correspondant respectivement aux positions des figures 10 et 11.

Les figures 14A à 14F sont des vues de détail qui illustrent très schématiquement une opération d'empilage d'une unité sur une autre.

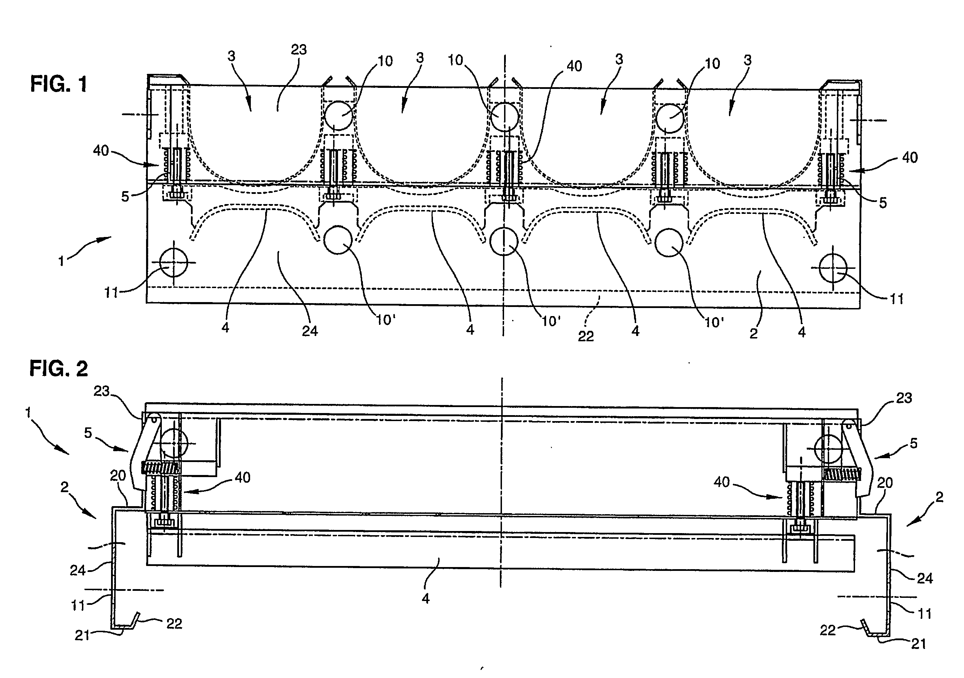

L'unité représentée sur les figures 1 à 3 est une unité de moulage et de cuisson de jambons à couvercles mobiles sollicités par des ressorts, du type général décrit dans le EP 0 722 663, auquel on pourra se reporter au besoin, et qui est commercialisée par la demanderesse sous la dénomination commerciale « POLYMODULE COMPENSATEUR », dénomination comprenant la marque déposée « POLYMODULE ».

Cette unité 1, en acier inoxydable, comprend des moyens de support 2 constitués par une paire de plaques - ou flancs- à pliage multiple fixés à l'extrémité d'une série de quatre goulottes 3 faisant office de moules recevant les jambons.

Ces moules, ouverts vers le haut, ont une paroi approximativement semi-circulaire, dont la forme détermine celle des barres de jambon à obtenir.

Les flancs 2 sont disposés transversalement, symétriquement, aux extrémités des goulottes auxquelles ils sont fixés par soudage.

Ils ont une configuration permettant l'empilage des unités les unes sur les autres, cette configuration bien connue étant détaillée dans le document FR-A-2 672 270, auquel on pourra également se reporter au besoin.

La section droite d'une plaque 2 présente (voir figure 2) une partie supérieure verticale et rectiligne 23, une première zone d'appui sensiblement horizontale 20 dirigée vers l'extérieur, une partie inférieure verticale et rectiligne 24, une seconde zone d'appui sensiblement horizontale dirigée vers l'intérieur 21, de moindre largeur que la première zone d'appui 20, et une portion d'extrémité basse 22 dirigée obliquement vers le haut et vers l'intérieur.

La zone d'appui 21 est adaptée pour se placer sur la zone d'appui 20 de l'unité sous-jacente au sein d'un empilement

Cette unité 1 est également solidaire d'un ensemble d'éléments de couvercle 4, dont le nombre est égal à celui des goulottes, quatre en l'occurrence, et chaque élément de couvercle s'étend en dessous d'un fond de goulotte, de telle manière que lorsque les unités 1 sont empilées les unes sur les autres, un élément de couvercle vient s'engager dans l'ouverture de la goulotte appartenant à l'unité sous-jacente, à l'aplomb duquel elle se trouve.

Les éléments de couvercle sont mobiles en direction verticale, sur une course limitée, un jeu de quatre ressorts hélicoïdaux 40 tendant constamment à les repousser vers le bas, selon une disposition qui fait l'objet du EP 0 722 663, et qui ne sera pas expliquée ici à nouveau afin de ne pas alourdir inutilement la présente description, ceci d'autant que l'invention s'applique aussi bien à des unités dont les éléments de couvercle sont fixes par rapport aux goulottes.

Dans le mode de réalisation illustré les éléments de couvercle ont une forme galbée, dont la convexité est tournée vers le bas, qui détermine la forme de la partie supérieure de la barre de jambon.

De façon connue, notamment par le FR 2 672 270 précité, il est prévu dans les flancs repliés 2 deux rangées superposées de trois orifices circulaires 10, respectivement 10', ménagés l'une (10) au niveau de la partie supérieure 23, l'autre (10') au niveau de la partie inférieure 24.

Les orifices 10 sont positionnés entre deux goulottes voisines.

Les orifices 10' sont positionnés entre deux éléments de couvercle voisins.

Les deux orifices d'extrémité 10 de la rangée supérieure (soit quatre au total) sont destinés à recevoir des organes de préhension équipant un robot de manutention.

Cependant, ces orifices 10 - y compris l'orifice central - ont également pour fonction de favoriser la circulation des fluides servant au traitement thermique des produits.

C'est ce qui explique la présence de la rangée inférieure d'orifices 10', qui viennent chacun en regard d'un orifice 10 de l'unité sous-jacente, afin d'autoriser cette circulation au sein de la pile.

Conformément à l'invention, l'unité 1 comporte des moyens d'encliquetage élastique intégrés qui, comme on le verra plus loin, permettent de la solidariser avec une unité similaire située au-dessus d'elle, ces moyens d'encliquetage pouvant être désactivés (ou escamotés) afin de permettre la désolidarisation mutuelle des deux unités, et donc le désempilage.

Ces moyens d'encliquetage sont portés par chacun des deux flancs 2.

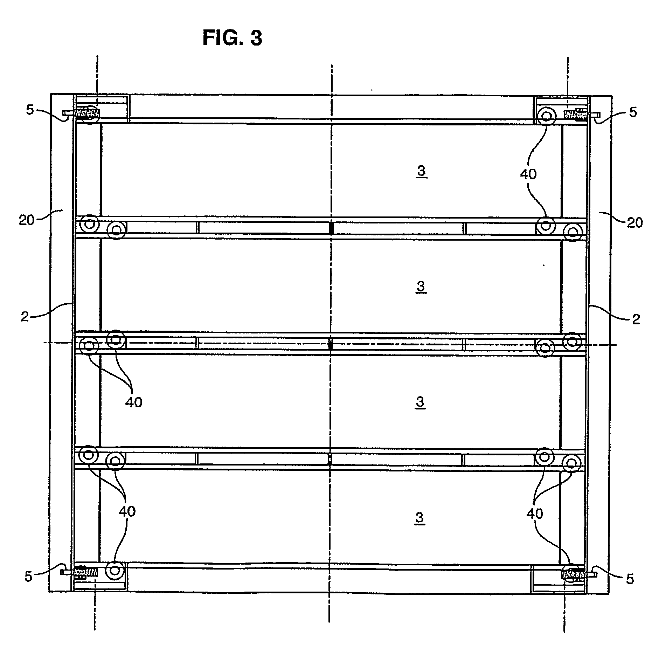

Ils comprennent un ensemble de quatre doigts de blocage mobiles 5 qui, vus de dessus, sont sensiblement disposés en rectangle, aux quatre angles de l'unité qui, vue de dessus présente une forme générale rectangulaire ou carrée (voir figure 3).

Un doigt 5 consiste en un levier pivotant, formant cliquet de blocage, sensiblement vertical, articulé en sa partie supérieure autour d'un axe horizontal 500 porté par un support 25 fixé contre la face interne de la partie supérieure 23 de la plaque 2, juste à côté d'une goulotte latérale 3 (à l'extérieur de cette goulotte).

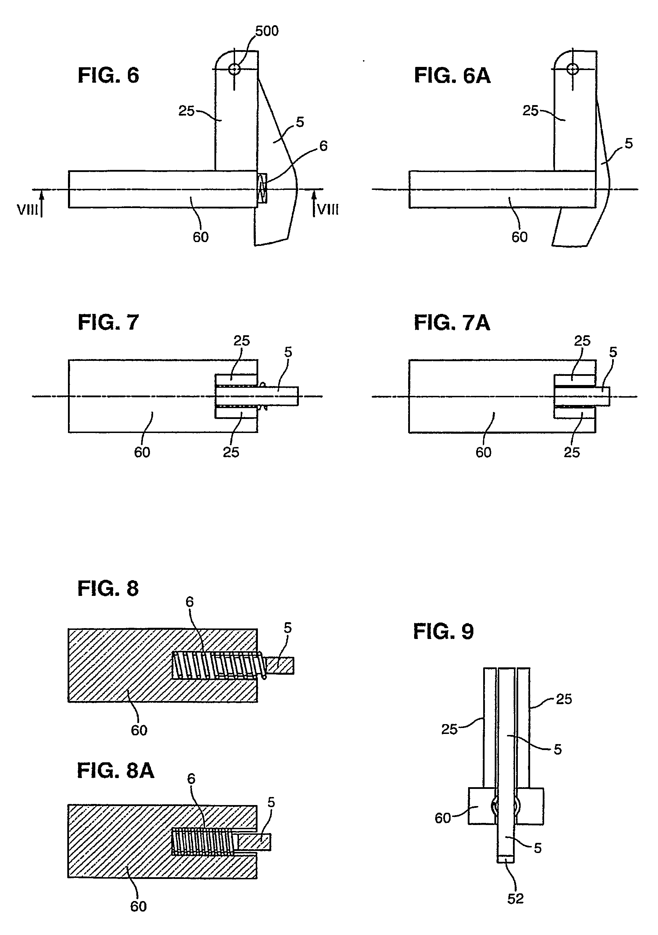

Le support 25 est constitué d'une paire de plaquettes verticales perpendiculaire à la partie de plaque 23, qui font office de flasques retenant l'axe 500, et entre lesquelles peut se déplacer le levier 5. Celui-ci a également la forme d'une plaquette verticale relativement mince (voir figure 9), apte à pivoter dans un plan vertical longitudinal (parallèlement à l'axe longitudinal des goulottes).

Dans la partie supérieure 23 du flanc 2, entre les flasques 23, en regard de chaque doigt 5, est ménagée une fente verticale 200 légèrement plus large que le doigt 5, ainsi positionnée qu'elle permet au levier d'y pénétrer partiellement, en faisant saillie ver l'extérieur.

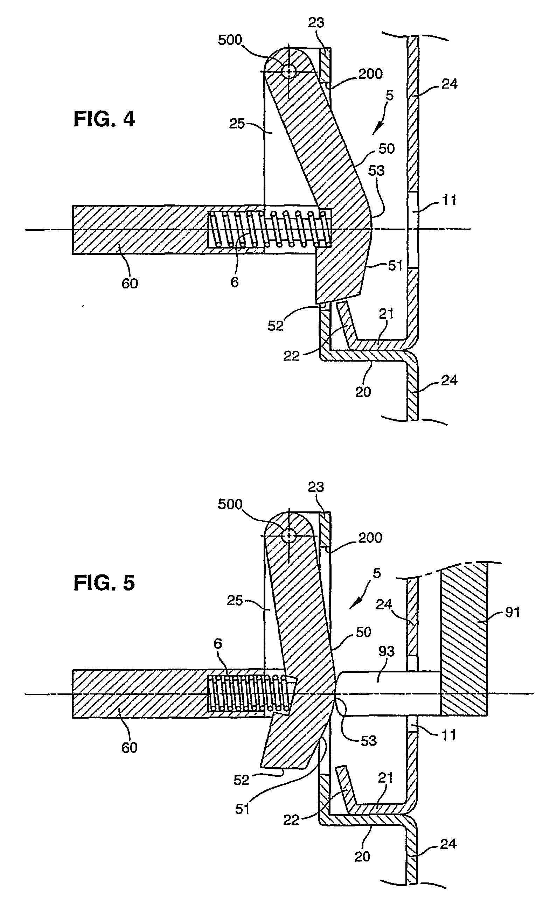

Un ressort de compression hélicoïdal 6 logé dans un fût-support fixe 60 (solidaire des flasques 25) tend constamment à faire pivoter le levier 50 vers l'extérieur, dans sa position dite de verrouillage, qui correspond à la figure 4.

Le bord supérieur de la fente 200 fait office de butée, limitant ce déplacement du levier vers l'extérieur.

Le doigt 5 a un chant externe profilé, présentant deux parties approximativement rectilignes 50-51 formant un « V » d'angle obtus très ouvert dont le sommet est tourné vers l'extérieur, et qui se raccordent par une zone de transition arrondie 53.

En partie basse, le doigt 5 présente un bord 52 légèrement courbe, convexe, dans le centre de courbure coïncide sensiblement avec l'axe 500.

Ce bord inférieur 52 du levier constitue une zone de surface d'arrêt, apte à prendre appui contre le chant de la partie 22 de la plaque d'une unité similaire située au-dessus de l'unité en question afin de la retenir appliquée contre elle, lorsque le doigt 5 occupe sa position de verrouillage, comme on le comprend à l'observation de la figure 4.

Lorsqu'il est repoussé vers l'intérieur par un organe de déverrouillage approprié, tel que le téton référencé 93 sur la figure 5, lequel est porté par un support mobile horizontalement 91, le levier 5 pivote à l'encontre du ressort de rappel 6, pour occuper une position escamotée dans laquelle la zone d'arrêt 52 a libéré la partie 22 qu'elle emprisonnait.

Un orifice 11 (similaire aux orifices 10, 10') percé dans la paroi de la partie principale inférieure 24 d'une unité permet le passage de cet organe pour actionner le doigt de blocage 5 de l'unité sous-jacente. Sur une unité 1, à chaque doigt 5 est par conséquent associé un orifice 11 positionné en dessous de lui (dans le même plan vertical longitudinal).

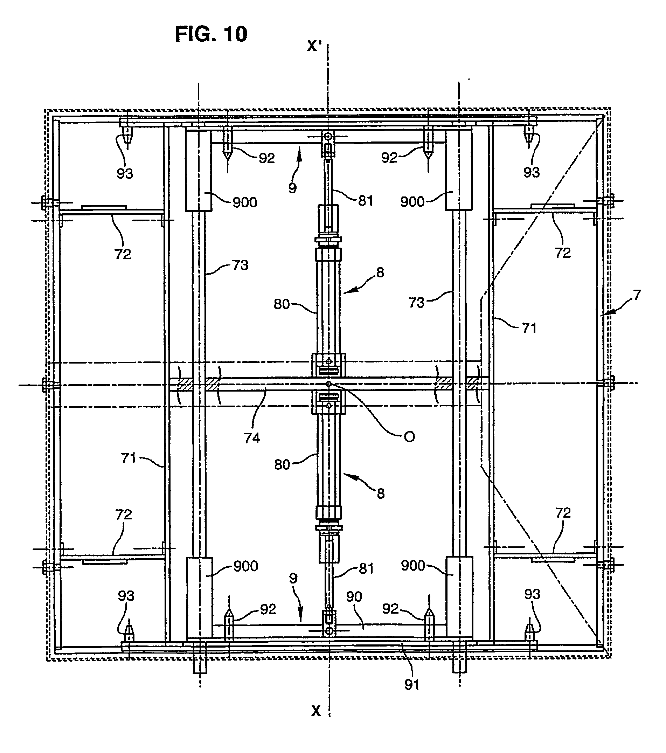

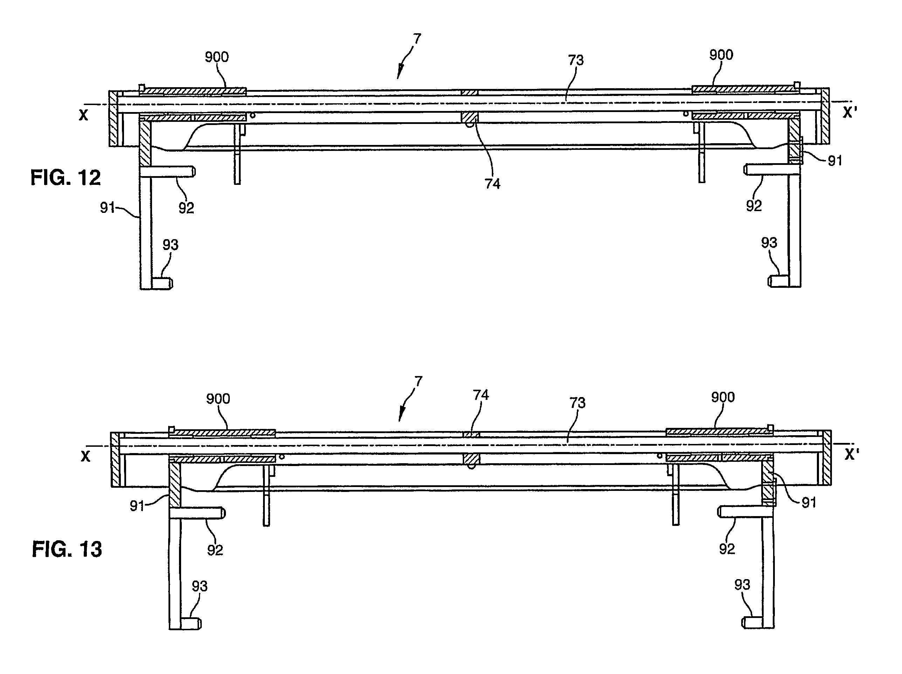

La tête de préhension et de manutention 7 représentée sur les figures 10 à 13 affecte la forme d'un cadre rectangulaire horizontal destiné à être fixé au bras d'un robot manipulateur non représenté, de type connu.

Ce cadre a une configuration symétrique par rapport à un point central O.

Il est rigidifié intérieurement par des membrures longitudinales 71 et transversales 72 et par une traverse centrale 74.

Ses côtés transversaux supportent une paire de tiges de guidage longitudinales 73, par exemple de section circulaire, qui s'étendent symétriquement par rapport à un axe central X-X', passant dans des trous ménagés dans la traverse 74.

De chaque côté de cette dernière sont fixés les cylindres 80 de deux vérins pneumatiques 8, à double effet, disposés tête-bêche, coaxialement suivant l'axe X-X'.

A l'extrémité de chaque tige de vérin 81 est fixé un coulisseau 9 comprenant une première plaque verticale et transversale 90 munie d'une paire de manchons 900 aptes à coulisser sur les tiges de guidage 73.

Contre la face externe de chaque plaque 90 est fixée une seconde plaque verticale et transversale 91 munie d'une paire de doigts de préhension 92 et d'une paire de tétons de déverrouillage 93.

Les doigts 92 d'une paire sont plus rapprochés l'un de l'autre, et situés à un niveau plus élevé, que les doigts 93.

En effet, si on considère la figure 1, lorsque la tête de préhension vient coiffer l'unité 1, les doigts de préhension 92 viennent se positionner en regard des orifices 10 latéraux de la rangée supérieure, tandis que les doigts de déverrouillage 93 viennent se positionner en regard des orifices 11.

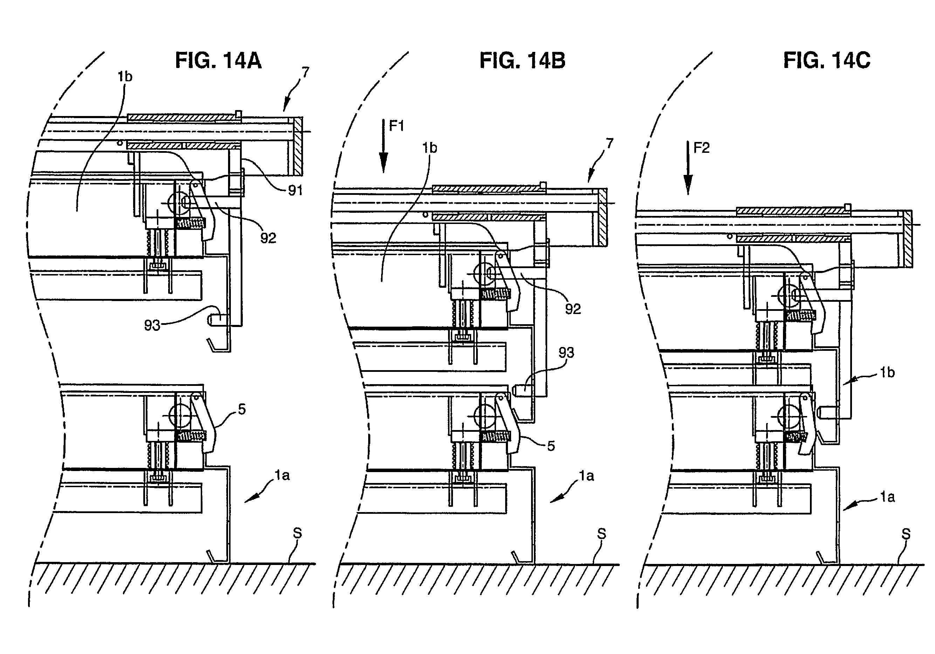

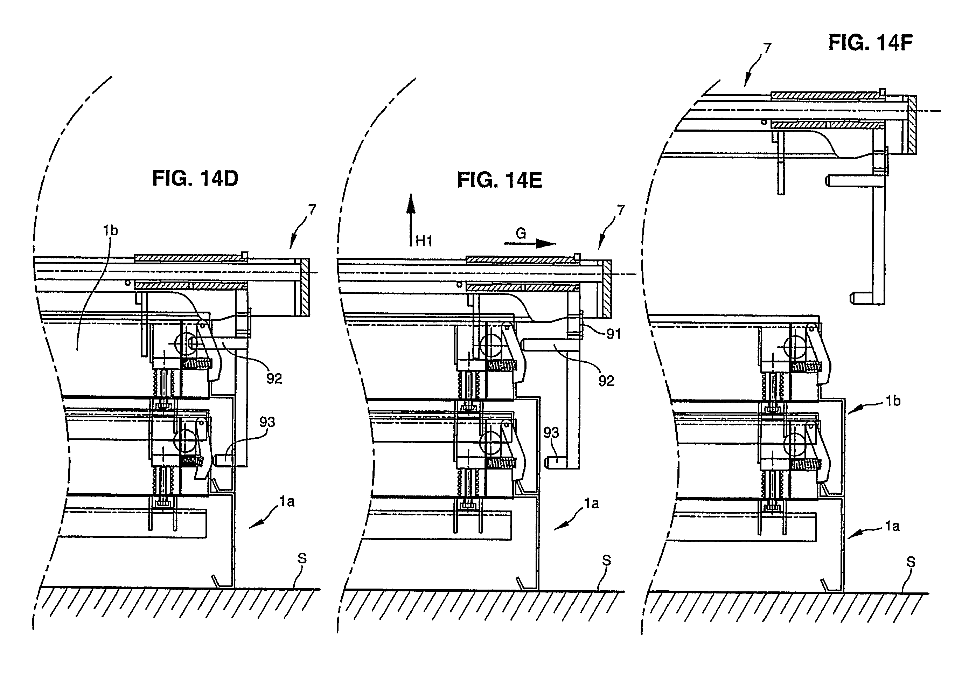

En se référant aux figures 14A à 14F, nous allons maintenant décrire une opération d'empilage d'une unité 1b sur une unité 1a déjà placée sur un support S.

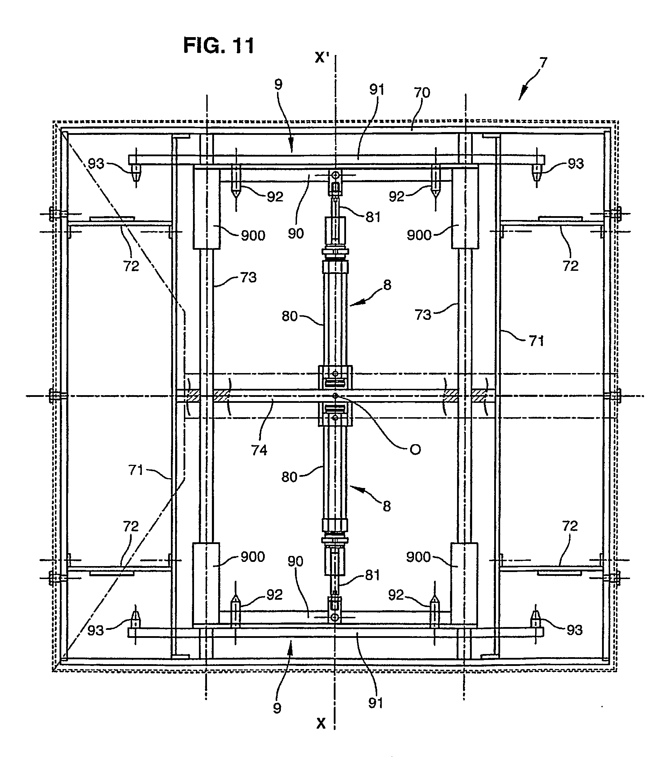

L'unité 1b est retenue par le cadre 7 au moyen des quatre doigts de préhension 92, chacun engagé dans un orifice 10, les vérins 8 se trouvant à l'état rétracté correspondant à la position de la figure 11, coulisseaux 9 rapprochés l'un de l'autre. Corrélativement, en raison de ce rapprochement, les tétons 93 se trouvent également positionnés à l'intérieur des orifices 11.

Durant ses déplacements, le cadre 7 conserve en permanence une position horizontale.

Au moyen du bras de robot, le cadre et l'unité 1b qu'il supporte sont convenablement positionnés au-dessus de l'unité 1a, et l'ensemble est abaissé comme cela est symbolisé par la flèche F1 sur la figure 14B.

La partie basse inclinée 22 des flancs 2 de l'unité 1b vient alors en contact avec la zone 50 des doigts de verrouillage 5 de l'unité sous-jacente 1a, car ces doigts font saillie vers l'extérieur sous l'action des ressorts 6.

Le mouvement de descente se poursuivant, la paroi oblique de cette partie basse repousse progressivement, par effet de rampe (ou de came), les doigts 5 vers l'intérieur.

Ceux-ci pivotent autour de l'axe 500 vers leur position escamotée, comprimant les ressorts 6.

En même temps que ce mouvement, symbolisé par la flèche F2 sur la figure 14C, la tête de robot développe un effort de pression relativement élevée vers le bas, ce qui a pour effet de contrecarrer les efforts des ressorts 40 agissant sur les éléments de couvercle de l'unité 1b et d'écraser les surépaisseurs de matière éventuelles des viandes qui se trouvent dans l'unité 1a, comprimant ainsi convenablement chaque produit à l'intérieur de sa goulotte.

Ce mouvement de descente conjugué à une forte compression a pour résultat que les deux parties planes et horizontales 21 des plaques 2 de l'unité supérieure 1b viennent en appui complet sur les parties également planes et horizontales 20 de l'unité inférieure 1a.

A ce stade, la partie 22 a passé sous le levier 50, son chant supérieur ayant franchi l'arête séparant les zones 51 et 52.

Cependant le téton 93 se trouve alors appliqué contre la portion arrondie convexe 53 du levier.

On commande alors les vérins 8 dans le sens de leur extension, ce qui a pour effet d'écarter l'un de l'autre les coulisseaux 9 et de faire sortir les doigts 92 et les tétons 93 des orifices 10, respectivement 11, dans lesquels ils étaient engagés. Ce déplacement est symbolisé par la flèche G à la figure 14E.

Les longueurs respectives des doigts de préhension 92 et des tétons de déverrouillage 93 sont avantageusement déterminés de telle façon que les doigts de préhension sont encore en prise avec l'unité 1b, ce qui permet de la maintenir appliquée contre l'unité sous-jacente 1a, alors que les tétons 93 se sont déjà suffisamment écartés pour autoriser l'encliquetage.

Le ressort 6 se détend et repousse vers l'extérieur le levier 50 jusqu'à ce qu'il vienne en butée contre le bord supérieur de la fente 200.

L'encliquetage est ainsi réalisé.

La zone d'arrêt 52 vient se positionner juste au dessus du chant supérieur de la partie 22 et assure ainsi la solidarisation des deux unités 1b - 1a, dans une position qui correspond à l'illustration de la figure 4.

Les deux unités sont solidaires l'une de l'autre complètement et irréversiblement.

Le cadre 7 peut être désolidarisé de l'unité 1b et remonté (flèche H, figure 14E).

Il est alors disponible (Figure 14F) pour aller prélever une autre unité.

L'empilage se poursuit de la même manière, par mise en place d'une troisième unité sur l'unité 1b, et ainsi de suite, jusqu'à ce que la pile souhaitée soit formée.

Après empilage et assemblage par encliquetage d'une série d'unités on obtient une pile parfaitement verticale et stable, qui peut être aisément transférée dans une cellule de cuisson.

Les dilatations susceptibles d'intervenir au cours du traitement thermique subséquent n'ont pas d'influence quant à l'ancrage mutuel de ces unités au sein de la pile.

Après cuisson des jambons, la pile est transférée hors de la cellule de cuisson, après quoi le désempilage peut se faire par des opérations inverses de celles décrites plus haut.

Le cadre 7 est amené au dessus de l'unité supérieure de la pile avec ses vérins 8 en extension, et il est positionné de telle façon que les doigts 92 et les tétons 93 se placent en regard des orifices 10 et, respectivement 11. On commande alors les vérins 8 dans le sens de leur rétraction, de sorte que les tétons 93 provoquent l'escamotage des doigts 5 en même temps que les doigts 92 se mettent en position de préhension dans les orifices 10.

On peut ainsi libérer l'unité supérieure et l'évacuer vers un poste d'enlèvement des jambons cuits.

L'opération est réitérée pour l'ensemble des unités de la pile.

L'invention est applicable également à des unités de moulage et de traitement thermique de produits alimentaires du type décrit dans le EP 0 888 065, dans desquels l'espace séparant une goulotte de l'élément de couvercle qui lui est associé constitue un conduit dans lequel peut circuler un fluide caloporteur destiné à assurer le traitement thermique.

Dans ce cas, les doigts d'encliquetage à ressort peuvent être montés à l'intérieur de réservations, c'est-à-dire de cavités étanches qui ne débouchent pas dans lesdits conduits, afin de ne pas en affecter l'étanchéité.

L'invention est également transposable à des unités dont les moyens de support qui autorisent l'empilage des unités les unes sur les autres sont des pieds, et non des plaques, comme celles faisant l'objet du EP 0 292 417 par exemple. Dans ce cas, les moyens d'encliquetage sont avantageusement intégrés à ces pieds.

## Revendications

1. Unité de moulage de produits alimentaires, notamment pour la cuisson de jambons, qui comporte un ensemble de moules en forme de goulottes (3) disposées horizontalement, côte à côte et parallèlement les unes aux autres, leur fond étant dirigé vers le bas et leur ouverture vers le haut, cet ensemble de moules étant fixé à des moyens de support (2) qui autorisent l'empilage des unités les unes sur les autres, cette unité (1) étant en outre solidaire d'un ensemble d'éléments de couvercle (4), dont le nombre est égal à celui des goulottes, chaque élément de couvercle s'étendant en dessous d'un fond de goulotte, de telle manière que lorsque les unités (1) sont empilées les unes sur les autres, chaque élément de couvercle vient s'engager dans l'ouverture de la goulotte appartenant à l'unité sous-jacente, à l'aplomb duquel elle se trouve, **caractérisée par le fait qu'**elle comporte des moyens d'encliquetage élastique (5-22) intégrés aptes à assurer automatiquement, par pression verticale du haut vers le bas, sa solidarisation avec une unité similaire sous-jacente et/ou située au-dessus d'elle, afin d'assurer une mise en appui complète de leurs moyens de support respectifs, ces moyens d'encliquetage pouvant être ultérieurement escamotés pour permettre la désolidarisation mutuelle des deux unités et le désempilage.

2. Unité de moulage selon la revendication 1, **caractérisée par le fait que** lesdits moyens d'encliquetage élastique intégrés comprennent des doigts de blocage mobiles (5), sollicités par un ressort (6), et susceptibles d'occuper, sous l'action de ce ressort, une première position, dite de verrouillage, dans laquelle ils coopèrent avec un élément de butée (22) de l'unité similaire sous-jacente et/ou située au-dessus d'elle, afin d'assurer la retenue mutuelle des deux unités en direction verticale, et une seconde position, dite escamotée, dans laquelle ils sont écartés dudit élément de butée et autorisent la désolidarisation mutuelle des deux unités (1).

3. Unité de moulage selon la revendication 2, **caractérisée par le fait que** lesdits doigts de blocage mobiles (5) sont des leviers pivotants.

4. Unité de moulage selon la revendication 2 ou 3, **caractérisée par le fait que** lesdits éléments de butée (22) sont intégrés à l'organe de support et que lesdits doigts de blocage mobiles (5) présentent une zone de surface d'arrêt (52), apte à prendre appui contre un élément de butée (22) de l'unité similaire située au-dessus d'elle afin de la retenir appliquée contre elle, lorsque le doigt mobile (5) occupe sa position de verrouillage.

5. Unité de moulage selon l'une des revendications 2 à 4, **caractérisée par le fait que** lesdits doigts de blocage mobiles (5) sont au nombre de quatre et que, vus de dessus, ils sont sensiblement disposés en rectangle.

6. Unité de moulage selon l'une des revendications 2 à 5, **caractérisée par le fait que** lesdits doigts de blocage mobiles (5) font légèrement saillie vers l'extérieur de l'unité lorsqu'ils occupent leur position de verrouillage, leur escamotage étant réalisé par poussée, vers l'intérieur de l'unité, par exemple au moyen de tétons mobiles de déverrouillage (93) équipant un robot manipulateur.

7. Unité de moulage selon l'une des revendications 2 à 6, dans laquelle lesdits moyens de support consistent en une paire de plaques d'appui (2) fixées transversalement à chaque extrémité de l'ensemble de goulottes, ces plaques étant repliées de telle façon que leur section droite comprend une partie supérieure verticale et rectiligne (23), une première zone d'appui sensiblement horizontale (20) dirigée vers l'extérieur, une partie inférieure verticale et rectiligne (24), une seconde zone d'appui sensiblement horizontale dirigée vers l'intérieur (21), de moindre largeur que la première zone d'appui (20), et une portion d'extrémité basse (22) dirigée obliquement vers le haut et vers l'intérieur, **caractérisée par le fait que**, d'une part, lesdits doigts de blocage mobiles (5) sont montés sur ces plaques (2) au niveau de leur dite partie supérieure (23), les ressorts (6) tendant à les déplacer vers l'extérieur, sur une course limitée, et que, d'autre part, c'est la base des plaques, au niveau de ladite portion d'extrémité basse (22), qui fait office d'élément de butée pour les doigts de blocage (5) de l'extrémité sous-jacente.

8. Unité de moulage selon la revendication 7, **caractérisée par le fait que** lesdits doigts de blocage possèdent une surface externe (50) profilée, formant une rampe, apte à glisser contre la base des plaques de l'unité située au-dessus d'elle, au niveau de leur dite portion d'extrémité basse (22), afin de repousser progressivement et provisoirement les doigts de blocage (5) vers l'intérieur, pour les escamoter, lors de la mise en appui par un mouvement de descente vertical de cette unité, ce qui réalise l'encliquetage automatique.

9. Unité de moulage selon la revendication 7 ou 8, **caractérisée par le fait que** dans lesdites plaques (2) sont ménagées, au niveau de leur dite partie inférieure (24), des ouvertures (11) qui, lorsque l'unité est correctement placée sur une autre unité sous-jacente, se positionnent en regard des doigts de blocage (5) de cette dernière, autorisant ainsi le passage d'organes de déverrouillage, tels que des tétons (93) mobiles horizontalement, transversalement aux plaques.

10. Unité de moulage selon l'une des revendications 7 à 9, **caractérisée par le fait qu'**elle comporte quatre doigts de blocage (5) disposés en rectangle, au voisinage de ses angles, à l'extérieur de l'ensemble de goulottes (3).

## Claims

1. A unit for molding food products, in particular for cooking ham, which has a set of molds in the form of troughs (3) arranged horizontally, side by side and parallel to one another, their bases being downwardly oriented and their openings being upwardly oriented, this set of molds being fixed to support means (3) which enable the units to be stacked on one another, this unit (1) being also connected solidly to a set of cover elements (4), the number of which is equal to the number of troughs, each cover element extending under a trough base in such a way that, when the units (1) are stacked on one another, each cover element is engaged in the opening of the trough belonging to the underlying unit, with which it is aligned, **characterized in that** the unit has built-in spring locking means (5-22) which act automatically, by means of downward vertical pressure, to solidly connect the unit to a similar unit located below and/or above it, in order to ensure that the respective support means thereof are fully supported, these locking means being subsequently retractable in order to detach two units from one another and to unstack them.

2. The molding unit as claimed in claim 1, **characterized in that** said built-in spring locking means comprise movable locking fingers (5) which are stressed by a spring (6) and which can, under the action of this spring, occupy a first position, called the locking position, in which they interact with a stop element (22) of the similar unit located under and/or above it, in order to ensure that the two units retain one another in the vertical direction, and a second position, called the retracted position, in which they are moved away from said stop element and allow the two units to be detached from one another (1).

3. The molding unit as claimed in claim 2,
**characterized in that** said movable locking fingers (5) are pivoting levers.

4. The molding unit as claimed in claim 2 or 3,
**characterized in that** said stop elements (22) are built into the support member and **in that** each of said movable locking fingers (5) has a stop surface area (52) which can bear against a stop element (22) of the similar unit located above it, in order to keep this unit pressed against it, when the movable finger (5) occupies its locking position.

5. The molding unit as claimed in any one of claims 2 to 4, **characterized in that** there are four of said movable locking fingers (5) and **in that** they are substantially arranged in a rectangular formation when seen from above.

6. The molding unit as claimed in any one of claims 2 to 5, **characterized in that** said movable locking fingers (5) project slightly toward the outside of the unit when they occupy their locking position, and are retracted by pushing toward the inside of the unit, for example by means of movable unlocking pins (93) fitted to a manipulator robot.

7. The molding unit as claimed in any one of claims 2 to 6, in which said support means are composed of a pair of support plates (2) fixed transversely to each end of the set of troughs, these plates being bent in such a way that their cross section comprises an upper vertical rectilinear part (23), a first substantially horizontal outwardly oriented support area (20), a lower vertical rectilinear part (24), a second substantially horizontal inwardly oriented support area (21), which is narrower than the first support area (20), and a bottom end portion (22) oriented obliquely upwardly and outwardly, **characterized in that**, on the one hand, said movable locking fingers (5) are mounted on said upper parts (23) of these plates (2), the springs (6) tending to move them outward over a limited path, and, on the other hand, the bases of the plates, at the level of said bottom end portions (22), act as stop elements for the locking fingers (5) of the underlying ends.

8. The molding unit as claimed in claim 7, **characterized in that** each of said locking fingers has a shaped outer surface (50) forming a ramp which can slide against the base of the plates of the unit located above it, at the level of their said bottom end portion (22), for the purpose of progressively and temporarily pushing the locking fingers (5) back toward the inside, in order to retract them, when the supporting state is established by a vertical downward movement of this unit, which causes the automatic locking.

9. The molding unit as claimed in claim 7 or 8,
**characterized in that** openings (11) are formed in said lower parts (24) of said plates (2), these openings being positioned, when the unit is correctly placed on another underlying unit, opposite the locking fingers (5) of the latter, thus allowing the passage of unlocking members, such as pins (93) which can move horizontally and transversely with respect to the plates.

10. The molding unit as claimed in any one of claims 7 to 9, **characterized in that** it has four locking fingers (5) arranged in a rectangular formation, in the vicinity of its corners, on the outside of the set of troughs (3).

## Patentansprüche

1. Formungseinheit für Lebensmittel, insbesondere für das Kochen von Schinken, die eine Gesamtheit von Formen in Form von Rinnen (3) umfasst, die horizontal, parallel nebeneinander angeordnet sind, wobei ihr Boden nach unten und ihre Öffnung nach oben gerichtet ist, wobei diese Gesamtheit von Formen an Trägermitteln (2) befestigt ist, die die Stapelung der Einheiten übereinander gestatten, wobei diese Einheit (1) unter anderem mit einer Gesamtheit von Deckelelementen (4) verbunden ist, deren Anzahl gleich der Anzahl der Rinnen ist, wobei sich jedes Deckelelement unter einem Rinnenboden erstreckt, so dass jedes Deckelelement in der Öffnung der Rinne in Eingriff kommt, die zur darunterliegenden Einheit gehört, in deren Lot sie sich befindet, wenn die Einheiten (1) aufeinander gestapelt werden, **dadurch gekennzeichnet, dass** sie integrierte elastische Einrastmittel (5-22) aufweist, die geeignet sind, um automatisch durch vertikalen Druck von oben nach unten ihre Verbindung mit einer ähnlichen darunter- und/oder darüberliegenden Einheit zu sichern, um ein vollständiges Aufstützen ihrer jeweiligen Trägermittel zu sichern, wobei diese Einrastmittel später eingefahren werden können, um das gegenseitige Lösen der zwei Einheiten und das Abstapeln zu erlauben.

2. Formungseinheit nach Anspruch 1, **dadurch gekennzeichnet, dass** die integrierten elastischen Einrastmittel bewegliche Blockierfinger (5) umfassen, die durch eine Feder (6) beansprucht werden und geeignet sind, unter Einwirkung der Feder eine erste Position einzunehmen, eine Verriegelungsposition, in der sie mit einem Anschlagelement (22) der ähnlichen darunter- und/oder darüberliegenden Einheit zusammenwirken, um das gegenseitige Festhalten der zwei Einheiten in vertikaler Richtung zu sichern, und eine zweite, eingefahrene, Position, in der sie von dem Anschlagelement entfernt sind und die gegenseitige Trennung der zwei Einheiten (1) erlauben.

3. Formungseinheit nach Anspruch 2, **dadurch gekennzeichnet, dass** die beweglichen Blockierfinger (5) schwenkbare Hebel sind.

4. Formungseinheit nach einem der Ansprüche 2 oder 3, **dadurch gekennzeichnet, dass** die Anschlagelemente (22) im Trägerelement integriert sind und dass die beweglichen Blockierfinger (5) eine Anschlagflächenzone (52) darstellen, die geeignet ist, um sich gegen ein Anschlagelement (22) der ähnlichen Einheit, die darüber liegt, abzustützen, um sie gegen sie angelegt zu halten, während der bewegliche Finger (5) seine Verriegelungsposition einnimmt.

5. Formungseinheit nach einem der Ansprüche 2 bis 4, **dadurch gekennzeichnet, dass** es vier Blockierfinger (5) gibt und dass sie von oben betrachtet etwa im Rechteck angeordnet sind.

6. Formungseinheit nach einem der Ansprüche 2 bis 5, **dadurch gekennzeichnet, dass** die beweglichen Blockierfinger (5) von der Einheit leicht nach außen hervorstehen, wenn sie ihre Verriegelungsposition einnehmen, wobei ihr Einfahren durch Drücken zum Inneren der Einheit verwirklicht wird, beispielsweise mittels beweglicher Entriegelungswarzen (93), mit denen ein Manipulatorroboter ausgestattet ist.

7. Formungseinheit nach einem der Ansprüche 2 bis 6, bei welcher die Trägermittel aus einem Paar Stützplatten (2) bestehen, die an jedem Ende der Rinnengesamtheit quer befestigt sind, wobei diese Platten so umgeschlagen sind, dass ihr gerader Bereich einen oberen vertikalen und geradlinigen Teil (23), einen ersten Stützbereich (20), der im Wesentlichen horizontal nach außen gerichtet ist, einen unteren, vertikalen und geradlinigen Teil (24), einen zweiten im Wesentlichen horizontalen Stützbereich (21) von geringerer Breite als der erste Stützbereich (20), der nach innen gerichtet ist, und einen niedrigen Endbereich (22) umfasst, der schräg nach oben und innen gerichtet ist, **dadurch gekennzeichnet, dass** einerseits die beweglichen Blockierfinger (5) auf diesen Platten (2) in Höhe ihres oberen Teils (23) befestigt sind, wobei die Federn (6) dazu neigen, sie auf einem beschränkten Weg nach außen zu verlagern, und dass andererseits die Basis der Platten in Höhe des niedrigen Endbereichs (22) als Anschlagelement für die Blockierfinger (5) des darunterliegenden Endes dient.

8. Formungseinheit nach Anspruch 7, **dadurch gekennzeichnet, dass** die Blockierfinger eine äußere profilierte Oberfläche (50) aufweisen, die eine Rampe bildet, die geeignet ist, um auf der Basis der Platten der Einheit zu gleiten, die über ihr in Höhe ihres niedrigen Endbereichs (22) angeordnet ist, um die Blockierfinger (5) fortschreitend und vorläufig nach innen zu drücken, um sie während des Abstützens durch eine vertikale Niedergangsbewegung der Einheit einzufahren, was das automatische Einrasten bewirkt.

9. Formungseinheit nach einem der Ansprüche 7 oder 8, **dadurch gekennzeichnet, dass** in den Platten (2) in Höhe ihres unteren Teils (24) Öffnungen (11) untergebracht sind, die sich bezüglich der Blockierfinger (5) einer anderen darunterliegenden Einheit positionieren, während die Einheit korrekt auf der letzteren angeordnet wird, was so den Durchlass von Entriegelungselementen gestattet, so wie horizontal quer zu den Platten bewegliche Warzen (93).

10. Formungseinheit nach einem der Ansprüche 7 bis 9, **dadurch gekennzeichnet, dass** sie vier Blockierfinger (5) umfasst, die im Rechteck in Nähe ihrer Winkel außen an der Gesamtheit der Rinnen (3) angebracht sind.
